# EUROPÄISCHE PATENTSCHRIFT

(11) **EP 2 555 953 B1**
(45) Veröffentlichungstag und Bekanntmachung des Hinweises auf die Patenterteilung: **23.11.2016**
(21) Anmeldenummer: 11703853.9
(22) Anmeldetag: 07.02.2011
(51) Int. Cl.: B60S 1/38

(54) **WISCHBLATT FÜR EINEN SCHEIBENWISCHER**
WIPER BLADE FOR A WINDSHIELD WIPER
BALAI D'ESSUIE-GLACE POUR UN ESSUIE-GLACE

(30) Priorität: 06.04.2010 DE 102010003645
(43) Veröffentlichungstag der Anmeldung: 13.02.2013
(73) Patentinhaber: Robert Bosch GmbH, 70442 Stuttgart (DE)
(72) Erfinder: DE BLOCK, Peter, B-3545 Halen (BE)
(86) Internationale Anmeldenummer: PCT/EP2011/051700
(87) Internationale Veröffentlichungsnummer: WO 2011/124404

(56) Entgegenhaltungen:
- EP-A1- 1 745 997
- WO-A2-2008/036894
- DE-A1- 10 333 082
- DE-A1-102009 002 411
- FR-A1- 2 933 930

## Beschreibung

### Stand der Technik

Die vorliegende Erfindung betrifft ein Wischblatt für einen Scheibenwischer, mit einer Wischleiste, an der mindestens eine Tragschiene angeordnet ist, die ein mit einer Kunststoffummantelung versehenes Federelement aufweist, wobei die Kunststoffummantelung zumindest in einem vorgegebenen Verbindungsbereich mit einer Basisanschlussvorrichtung verschweißt ist, die einen thermoplastischen Kunststoff mit einem vorgegebenen Schmelzpunkt aufweist.

Die EP 1 359 073 B1 beschreibt ein derartiges Wischblatt mit einer Wischleiste, die an ihren Längsseiten einander gegenüberliegende Längsnuten aufweist, in denen beabstandete Längsstreifen eines Trägerelements angeordnet sind, wobei benachbarte Enden der Längsstreifen mittels eines jeweiligen Verbindungsstücks miteinander verbunden sind. An den Längsseiten der voneinander wegweisenden Längsstreifen sind Eingriffselemente einer Verbindungsvorrichtung derart angeschweißt, dass sie Scherkräften in einer Richtung entlang der Längsstreifen standhalten. Diese Verbindungsvorrichtung und die Eingriffselemente bestehen aus einem Stück eines thermoplastischen Materials und die Längsstreifen sind mit einer aus diesem thermoplastischen Material ausgebildeten Ummantelung versehen.

Ein gattungsgemäßes Wischblatt ist aus der WO2008/036894 A2 bekannt.

Nachteilig an diesem Stand der Technik ist, dass z. B. durch ein Verrutschen eines der Längsstreifen oder beider Längsstreifen relativ zur Wischleiste vor einem entsprechenden Schweißvorgang die Eingriffselemente der Verbindungsvorrichtung an einer inkorrekten Position an dem bzw. den Längsstreifen angeschweißt sein können.

### Offenbarung der Erfindung

Eine Aufgabe der Erfindung ist es daher, ein neues Wischblatt für einen Scheibenwischer bereit zu stellen, bei dem ein Anschweißen einer zugeordneten Basisanschlussvorrichtung in einer inkorrekten Position an entsprechenden Tragschienen des Wischblatts vermieden werden kann.

Dieses Problem wird gelöst durch ein Wischblatt für einen Scheibenwischer, mit einer Wischleiste, an der mindestens eine Tragschiene angeordnet ist, die ein mit einer Kunststoffummantelung versehenes Federelement aufweist. Die Kunststoffummantelung ist zumindest in einem vorgegebenen Verbindungsbereich mit einer Basisanschlussvorrichtung verschweißt, die einen thermoplastischen Kunststoff mit einem vorgegebenen Schmelzpunkt aufweist.

Die Erfindung ermöglicht somit die Bereitstellung eines Wischblatts mit einer Tragschiene, an der die Basisanschlussvorrichtung im Wesentlichen ausschließlich in vorgegebenen Positionen anschweißbar ist, in denen z. B. die Kunststoffummantelung den zweiten thermoplastischen Kunststoff aufweist.

Das Eingangs genannte Problem wird gelöst durch ein Wischblatt für einen Scheibenwischer, mit einer Wischleiste, an der mindestens eine Tragschiene angeordnet ist, die ein mit einer Kunststoffummantelung versehenes Federelement aufweist. Die Kunststoffummantelung weist einen thermoplastischen Kunststoff mit einem vorgegebenen Schmelzpunkt auf und ist zumindest in einem vorgegebenen Verbindungsbereich mit einer Basisanschlussvorrichtung verschweißt. Die Basisanschlussvorrichtung weist mindestens einen ersten und einen zweiten thermoplastischen Kunststoff auf.

Die Erfindung ermöglicht somit die Bereitstellung einer einfachen und kostengünstigen Basisanschlussvorrichtung, die sicher und zuverlässig mit der Tragschiene des Wischblatts verschweißbar ist.

Nach der Erfindung ist dem ersten thermoplastischen Kunststoff ein erster Schmelzpunkt zugeordnet und dem zweiten thermoplastischen Kunststoff ist ein zweiter Schmelzpunkt zugeordnet, der kleiner als der erste Schmelzpunkt ist.

Somit kann bei einem entsprechenden Schweißvorgang bei der Herstellung des Wischblatts bei einem Aufschmelzen des zweiten thermoplastischen Kunststoffs ein Aufschmelzen des ersten thermoplastischen Kunststoffs sicher und zuverlässig verhindert werden.

Der zweite Schmelzpunkt und der vorgegebene Schmelzpunkt liegen vorzugsweise innerhalb eines vorgegebenen Temperaturbereichs, der unterhalb des ersten Schmelzpunkts liegt.

Somit können auf einfache Art und Weise der thermoplastische Kunststoff mit dem vorgegebenen Schmelzpunkt und der zweite thermoplastische Kunststoff bei einem entsprechenden Schweißvorgang aufgeschmolzen und miteinander verschweißt werden, wobei ein Aufschmelzen des ersten thermoplastischen Kunststoffs sicher und zuverlässig verhindert wird.

Der zweite Schmelzpunkt und der vorgegebene Schmelzpunkt sind vorzugsweise annähernd gleich.

Somit kann ein präzises und stabiles Verschmelzen und Verschweißen des thermoplastischen Kunststoffs mit dem vorgegebenen Schmelzpunkt mit dem zweiten thermoplastischen Kunststoff gewährleistet werden.

Gemäß einer Ausführungsform ist der erste Schmelzpunkt derart bestimmt, dass bei einem Aufschmelzen des thermoplastischen Kunststoffs mit dem vorgegebenen Schmelzpunkt und des zweiten thermoplastischen Kunststoffs ein Aufschmelzen des ersten thermoplastischen Kunststoffs vermeidbar ist.

Somit kann ein ungewünschtes Verschweißen des thermoplastischen Kunststoffs mit dem vorgegebenen Schmelzpunkt mit dem ersten thermoplastischen Kunststoff wirksam verhindert werden.

Nach der Erfindung weisen der thermoplastische Kunststoff mit dem vorgegebenen Schmelzpunkt und der zweite thermoplastische Kunststoff eine im Wesentlichen übereinstimmende Zusammensetzung auf.

Somit kann eine einfache und kostengünstige Ausgestaltung der mindestens einen Tragschiene und der Basisanschlussvorrichtung erreicht werden.

Gemäß einer Ausführungsform ist die Tragschiene in dem vorgegebenen Verbindungsbereich durch Ultraschallschweißen mit der Basisanschlussvorrichtung verschweißt.

Somit kann die Tragschiene sicher und zuverlässig mit der Basisanschlussvorrichtung verschweißt werden.

An der Basisanschlussvorrichtung ist bevorzugt eine Adaptereinheit zur Anlenkung der Wischleiste an einem Wischerarm befestigt, die zur Verbindung mit einem dem Wischerarm zugeordneten Anschlussglied ausgebildet ist.

Somit kann die Wischleiste auf einfache Art und Weise mit dem Wischerarm verbunden werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine Seitenansicht eines Wischblatts mit einer Wischleiste, an der eine Basisanschlussvorrichtung mittels Ultraschallschweißen befestigt ist, gemäß einer Ausführungsform,
Fig. 2 eine Schnittansicht des Wischblatts von Fig. 1 vor einem entsprechenden Ultraschall-Schweißvorgang,
Fig. 3 eine vergrößerte Darstellung der Schnittansicht einer Tragschiene von Fig. 2, und
Fig. 4 eine perspektivische Schnittansicht einer Wischleiste gemäß einer weiteren Ausführungsform.

### Beschreibung der Ausführungsbeispiele

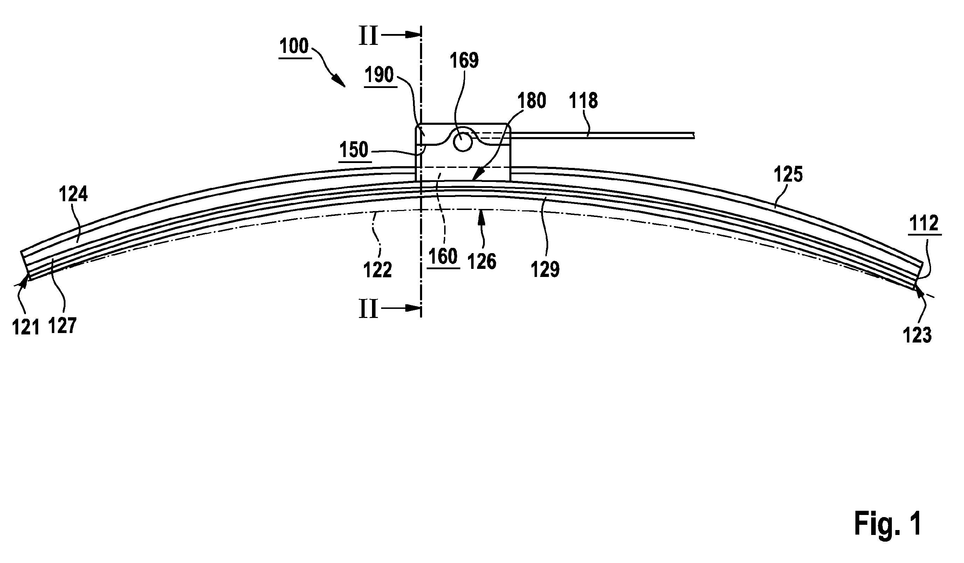

Fig. 1 zeigt ein Wischblatt 100 mit einer Wischleiste 112, die eine über einen Kippsteg 127 mit einer Rückenleiste 124 verbundene Wischlippe 129 aufweist. An der Rückenleiste 124 ist ein Spoiler 125 vorgesehen. An der Wischleiste 112 ist eine Basisanschlussvorrichtung 160 vorgesehen, an der eine Adaptereinheit 150 zum Anschließen eines einem Wischerarm 118 zugeordneten Anschlussglieds 190 befestigt ist. Das Anschlussglied 190 ist in Fig. 1 beispielhaft über einen Gelenkbolzen 169 an der Adaptereinheit 150 angeschlossen. Mit Hilfe des Wischerarms 118 kann das Wischblatt 100 zum Wischen über eine strichpunktiert dargestellte Scheibe 122, z.B. eine Kraftfahrzeugscheibe, geführt werden.

Es wird jedoch darauf hingewiesen, dass die Ausgestaltung des Wischblatts 100 mit Basisanschlussvorrichtung 160 und Adaptereinheit 150 zum Anschließen des Anschlussglieds 190 lediglich beispielhaften Charakter hat und nicht als Einschränkung der Erfindung zu verstehen ist. Vielmehr sind auch alternative Ausgestaltungen möglich, die ebenfalls im Rahmen der vorliegenden Erfindung liegen, z. B. können die Basisanschlussvorrichtung 160 und die Adaptereinheit 150 einstückig ausgebildet sein oder die Adaptereinheit 150 und das Anschlussglied 190 können einstückig ausgebildet sein.

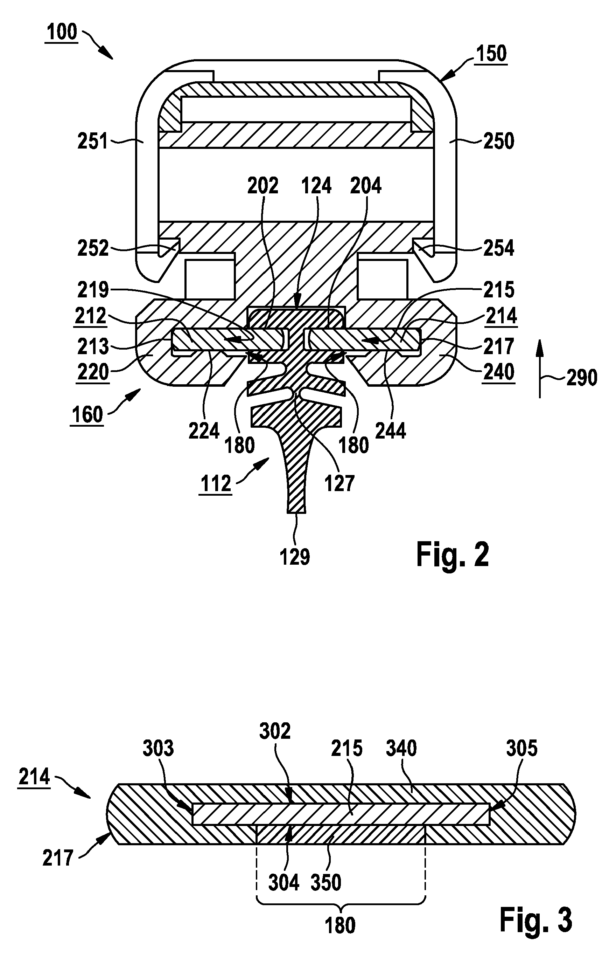

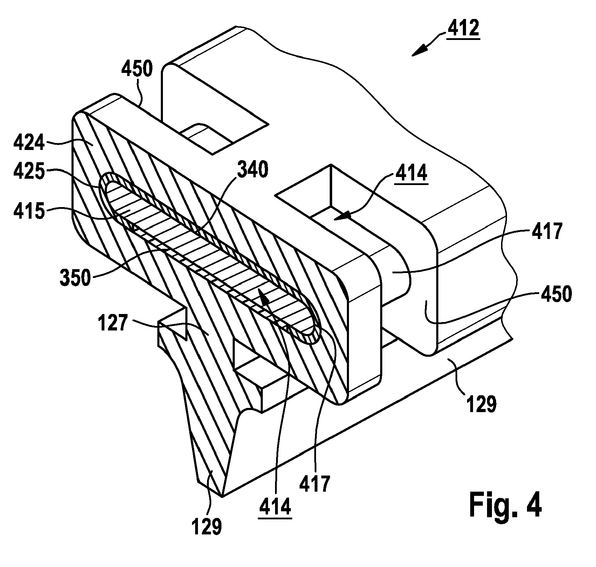

Gemäß einer Ausführungsform ist das Wischblatt 100 in Flachbalkenbauweise ausgebildet, d.h. die Wischleiste 112 weist seitliche Längsnuten (202, 204 in Fig. 2) auf, in denen zwei Tragschienen (212, 214 in Fig. 2), vorzugsweise Federschienen, angeordnet sind, wie beispielhaft unten bei Fig. 2 beschrieben. Alternativ hierzu kann die Wischleiste 112 als Hohlprofil mit einem etwa zentralen Längskanal (425 in Fig. 4) ausgebildet sein, in dem eine einzelne Tragschiene (414 in Fig. 4) angeordnet ist, wie beispielhaft unten bei Fig. 4 beschrieben.

Die Wischleiste 112 mit der daran vorgesehenen Basisanschlussvorrichtung 160 ist bevorzugt gelenkfrei ausgebildet, wobei die Basisanschlussvorrichtung 160 vorzugsweise an der Wischleiste 112 vormontiert ist. Gemäß einer Ausführungsform ist die Basisanschlussvorrichtung 160 durch einen geeigneten Schweißvorgang, z. B. einen Ultraschall-Schweißvorgang, mindestens in einem vorgegebenen Verbindungsbereich 180, der beispielsweise von einer axialen Erstreckung der Basisanschlussvorrichtung 160 vorgegeben ist, an die Tragschienen (212, 214 in Fig. 2) angeschweißt, wie unten bei Fig. 2 beschrieben.

In Fig. 1 ist das Wischblatt 100 noch nicht vollständig auf die Scheibe 122 aufgesetzt, es liegen nur dessen axiale Wischblattenden 121, 123 an der Scheibe 122 an, während die Wischleiste 112 in Wischblattmitte 126, d.h. etwa im Bereich der Adaptereinheit 150, noch von der Scheibe 122 beabstandet ist. Wird über den Wischerarm 118 eine vorgesehene Anpresskraft auf das Anschlussglied 190 und somit die Adaptereinheit 150 ausgeübt, legt sich die Wischleiste 112 an der Scheibe 122 an. Hierbei wird ein gleichmäßiger Anpressdruck über die gesamte Wischblattlänge erreicht, auch wenn sich die Scheibenkrümmung im Verlauf der Wischbewegung ändert.

Fig. 2 zeigt eine Schnittansicht des Wischblatts 100 mit der Wischleiste 112 und der Adaptereinheit 150 von Fig. 1, in Richtung von in Fig. 1 mit II gekennzeichneten Pfeilen, gemäß einer Ausführungsform vor einem entsprechenden Schweißvorgang. Die Adaptereinheit 150 hat beispielhaft einen etwa umgedreht U-förmigen Aufbau mit Wandabschnitten 250, 251, an denen illustrativ hakenartige Rastzähne 254 bzw. 252 ausgebildet sind, über die die Adaptereinheit 150 an der Basisanschlussvorrichtung 160 verrastet ist. Es wird jedoch darauf hingewiesen, dass die Verrastung der Adaptereinheit 150 an der Basisanschlussvorrichtung 160 lediglich beispielhaften Charakter hat und nicht als Einschränkung der Erfindung dient. Vielmehr kann die Adaptereinheit 150 auf beliebige Art und Weise an der Basisanschlussvorrichtung 160 befestigt werden, z. B. durch Schweißen oder Kleben.

Die Basisanschlussvorrichtung 160 weist bevorzugt mindestens einen thermoplastischen Kunststoff mit einem vorgegebenen Schmelzpunkt auf und hat illustrativ zwei laterale Halteglieder 220, 240, die zugeordnete, etwa parallel zueinander angeordnete Tragschienen 212 bzw. 214 zumindest abschnittsweise krallenartig umgreifen. Die Tragschienen 212, 214 sind in Längsnuten 202, 204 angeordnet, die in der Rückenleiste 124 der Wischleiste 112 ausgebildet sind. Hierbei können die Tragschienen 212, 214 an ihren axialen Enden z. B. über geeignete Endkappen miteinander verbunden sein, wie dem Fachmann hinreichend bekannt ist.

Gemäß einer Ausführungsform weisen die Tragschienen 212, 214 jeweils ein mit einer Kunststoffummantelung 213 bzw. 217 versehenes Federelement 219 bzw. 215 auf. Das Federelement 219, 215 kann z. B. aus gehärtetem Stahl, Titan, Aluminium und/oder Kunststoff ausgebildet sein. Die Kunststoffummantelung 213, 217 weist bevorzugt zumindest einen ersten und einen zweiten thermoplastischen Kunststoff auf, wobei der zweite thermoplastische Kunststoff zumindest in dem vorgegebenen Verbindungsbereich 180 vorgesehen ist und zum Verschweißen der Kunststoffummantelung 213 bzw. 217 mit dem thermoplastischen Kunststoff der Basisanschlussvorrichtung 160 dient, wie unten stehend und bei Fig. 3 beschrieben.

An den Haltegliedern 220, 240 der Basisanschlussvorrichtung 160 sind zur Vereinfachung und Verbesserung eines entsprechenden Schweißvorgangs Energierichtungsgeber 224 bzw. 244 ausgebildet. Diese werden von den Haltegliedern 220, 240 bevorzugt federnd in Richtung eines Pfeils 290 gegen die Tragschienen 212 bzw. 214 beaufschlagt.

Zur Befestigung der Basisanschlussvorrichtung 160 an den Tragschienen 212, 214 wird in den vorgegebenen Verbindungsbereich 180 z. B. mittels Ultraschall derart Energie eingebracht, dass zunächst die Energierichtungsgeber 224 bzw. 244 aufschmelzen und dann der an den Tragschienen 212 bzw. 214 vorgesehene, zweite thermoplastische Kunststoff sowie der thermoplastische Kunststoff der Basisanschlussvorrichtung 160. Diese verschmelzen hierbei miteinander und schweißen somit die Basisanschlussvorrichtung 160 in dem vorgegebenen Verbindungsbereich 180 an den Tragschienen 212, 214 an.

Gemäß einer Ausführungsform hat der erste thermoplastische Kunststoff einen ersten Schmelzpunkt und der zweite thermoplastische Kunststoff einen zweiten Schmelzpunkt, der kleiner als der erste Schmelzpunkt ist, wobei der zweite Schmelzpunkt und der vorgegebene Schmelzpunkt des thermoplastischen Kunststoffs der Basisanschlussvorrichtung 160 innerhalb eines vorgegebenen Temperaturbereichs liegen, der unterhalb des ersten Schmelzpunkts liegt, bevorzugt wesentlich darunter. Vorzugsweise sind der zweite Schmelzpunkt und der vorgegebene Schmelzpunkt annähernd gleich. Zur Vereinfachung der Beschreibung wird der erste Schmelzpunkt nachfolgend auch als "hoher" Schmelzpunkt bezeichnet, während der zweite und der vorgegebene Schmelzpunkt nachfolgend auch als "niedriger" Schmelzpunkt bezeichnet werden.

Der hohe Schmelzpunkt ist bevorzugt derart bestimmt, dass beim Aufschmelzen des thermoplastischen Kunststoffs mit dem vorgegebenen, niedrigen Schmelzpunkt und des zweiten thermoplastischen Kunststoffs ein Aufschmelzen des ersten thermoplastischen Kunststoffs vermieden wird. Vorzugsweise sind der thermoplastische Kunststoff mit dem vorgegebenen, niedrigen Schmelzpunkt und der zweite thermoplastische Kunststoff im Wesentlichen übereinstimmend oder weisen zumindest eine ähnliche bzw. annähernd gleiche Zusammensetzung auf.

Es wird jedoch darauf hingewiesen, dass die in Fig. 2 beschriebene Ausführungsform lediglich beispielhaften Charakter hat und nicht als Einschränkung der Erfindung zu verstehen ist. Vielfache Abweichungen und Modifikationen sind im Rahmen der vorliegenden Erfindung möglich. Z. B. kann die Kunststoffummantelung 213, 217 der Tragschienen 212 bzw. 214 aus dem thermoplastischen Kunststoff mit dem vorgegebenen, niedrigen Schmelzpunkt ausgebildet sein, während die Basisanschlussvorrichtung 160 den oben beschriebenen, ersten und zweiten thermoplastischen Kunststoff aufweist, wobei der zweite thermoplastische Kunststoff bevorzugt an einem dem Verbindungsbereich 180 zugewandten Abschnitt der Basisanschlussvorrichtung 160 vorgesehen ist. Darüber hinaus können z. B. die Energierichtungsgeber 224, 244 an den Kunststoffummantelungen 213, 217 der Tragschienen 212 bzw. 214 ausgebildet sein, anstatt an den Haltegliedern 220 bzw. 240 der Basisanschlussvorrichtung 160, wie in Fig. 2 gezeigt.

Fig. 3 zeigt die Tragschiene 214 mit der Federschiene 215 und der Kunststoffummantelung 217 von Fig. 2, die gemäß einer Ausführungsform aus einer Coextrusion des ersten und zweiten thermoplastischen Kunststoffs ausgebildet ist. Die Federschiene 215 hat illustrativ zwei einander gegenüberliegende, obere und untere Breitseiten 302, 304 sowie zwei einander gegenüberliegende, linke und rechte Schmalseiten 303, 305, die von der Kunststoffummantelung 217 umschlossen sind.

Gemäß einer nicht angesprochene Ausführungsform ist ein erster Bereich 340 der Kunststoffummantelung 217, der etwa die obere Breitseite 302, die linke und rechte Schmalseite 303, 305 und zumindest abschnittsweise die untere Breitseite 304 umfasst, von dem ersten thermoplastischen Kunststoff mit dem hohen Schmelzpunkt ummantelt. In einem nicht von dem ersten thermoplastischen Kunststoff ummantelten Bereich 350 an der unteren Breitseite 304, der in seinen Abmessungen etwa dem vorgegebenen Verbindungsbereich 180 entspricht, ist der zweite thermoplastische Kunststoff mit dem niedrigen Schmelzpunkt vorgesehen.

Es wird jedoch darauf hingewiesen, dass das Ausbilden des zweiten thermoplastischen Kunststoffs an der unteren Breitseite 304 lediglich beispielhaften Charakter hat und nicht als Einschränkung der Erfindung zu verstehen ist. Vielmehr kann der zweite thermoplastische Kunststoff an einem beliebigen, vorgegebenen Ort an der Tragschiene 214 vorgesehen sein, an den die Basisanschlussvorrichtung 160 von Fig. 2 anzuschweißen ist, z. B. an den Schmalseiten 303, 305 und/oder der oberen Breitseite 302.

Fig. 4 zeigt eine Wischleiste 412 gemäß einer alternativen Ausführungsform, die ebenfalls bei dem Wischblatt 100 von Fig. 1 Anwendung finden kann. Die Wischleiste 412 weist eine als Hohlprofil ausgebildete Rückenleiste 424 mit einem etwa zentralen Längskanal 425 auf, in dem eine einzelne Tragschiene 414 angeordnet ist.

Die Tragschiene 414 hat illustrativ eine mit einer Kunststoffummantelung 417 versehene Federschiene 415, die z. B. aus gehärtetem Stahl, Titan, Aluminium und/oder Kunststoff ausgebildet ist. Die Kunststoffummantelung 417 ist beispielhaft analog zur Kunststoffummantelung 217 von Fig. 3 ausgebildet und weist somit ebenfalls die Bereiche 340, 350 auf.

Die Wischleiste 412 weist illustrativ an ihrer Rückenleiste 424 ein oder mehrere Aussparungen 450 auf. Eine zugeordnete Basisanschlussvorrichtung (z. B. Basisanschlussvorrichtung 160 von Fig. 1) weist geeignete Eingriffselemente (z. B. Halteglieder 220, 240 von Fig. 2) auf, die durch die Aussparungen 450 hindurch die Tragschiene 414 zumindest abschnittsweise umgreifen können, um gemäß einer Ausführungsform ein wie oben bei Fig. 2 beschriebenes Verschweißen der Tragschiene 414 mit der zugeordneten Basisanschlussvorrichtung zu ermöglichen.

## Patentansprüche

1. Wischblatt (100) für einen Scheibenwischer, mit einer Wischleiste (112), an der mindestens eine Tragschiene (214) angeordnet ist, die ein mit einer Kunststoffummantelung (217) versehenes Federelement (215) aufweist, wobei die Kunststoffummantelung (217) einen thermoplastischen Kunststoff mit einem vorgegebenen Schmelzpunkt aufweist und zumindest in einem vorgegebenen Verbindungsbereich (180) mit einer Basisanschlussvorrichtung (160) verschweißt ist, wobei die Basisanschlussvorrichtung (160) mindestens einen ersten und einen zweiten thermoplastischen Kunststoff aufweist, **dadurch gekennzeichnet, dass** dem ersten thermoplastischen Kunststoff ein erster Schmelzpunkt zugeordnet ist und dem zweiten thermoplastischen Kunststoff ein zweiter Schmelzpunkt zugeordnet ist, der kleiner als der erste Schmelzpunkt ist und wobei der thermoplastische Kunststoff mit dem vorgegebenen Schmelzpunkt und der zweite thermoplastische Kunststoff eine im Wesentlichen übereinstimmende Zusammensetzung aufweisen.

2. Wischblatt nach Anspruch 1, **dadurch gekennzeichnet, dass** der zweite Schmelzpunkt und der vorgegebene Schmelzpunkt innerhalb eines vorgegebenen Temperaturbereichs liegen, der unterhalb des ersten Schmelzpunkts liegt.

3. Wischblatt nach Anspruch 1 oder 2, **dadurch gekennzeichnet, dass** der zweite Schmelzpunkt und der vorgegebene Schmelzpunkt annähernd gleich sind.

4. Wischblatt nach einem der Ansprüche 1 bis 3, **dadurch gekennzeichnet, dass** der erste Schmelzpunkt derart bestimmt ist, dass bei einem Aufschmelzen des thermoplastischen Kunststoffs mit dem vorgegebenen Schmelzpunkt und des zweiten thermoplastischen Kunststoffs ein Aufschmelzen des ersten thermoplastischen Kunststoffs vermeidbar ist.

5. Wischblatt nach einem der vorhergehenden Ansprüche, **dadurch gekennzeichnet, dass** die Tragschiene (214) in dem vorgegebenen Verbindungsbereich (180) durch Ultraschallschweißen mit der Basisanschlussvorrichtung (160) verschweißt ist.

6. Wischblatt nach einem der vorhergehenden Ansprüche, **dadurch gekennzeichnet, dass** an der Basisanschlussvorrichtung (160) eine Adaptereinheit (150) zur Anlenkung der Wischleiste (112) an einem Wischerarm (118) befestigt ist, die zur Verbindung mit einem dem Wischerarm (118) zugeordneten Anschlussglied (190) ausgebildet ist.

## Claims

1. Wiper blade (100) for a windshield wiper, having a wiping strip (112) on which there is arranged at least one supporting rail (214) which has a spring element (215) provided with a plastic sheath (217), wherein the plastic sheath (217) comprises a thermoplastic material with a predefined melting point and at least in a predefined connecting region (180) is welded to a base connecting device (160), wherein the base connecting device (160) comprises at least one first and one second thermoplastic material, **characterized in that** a first melting point is allocated to the first thermoplastic material and a second melting point which is lower than the first melting point is allocated to the second thermoplastic material and wherein the thermoplastic material with the predefined melting point and the second thermoplastic material have a substantially corresponding composition.

2. Wiper blade according to Claim 1, **characterized in that** the second melting point and the predefined melting point lie within a predefined temperature range which lies below the first melting point.

3. Wiper blade according to Claim 1 or 2, **characterized in that** the second melting point and the predefined melting point are approximately the same.

4. Wiper blade according to any of Claims 1 to 3, **characterized in that** the first melting point is determined such that on melting of the thermoplastic material with the predefined melting point and of the second thermoplastic material, a melting of the first thermoplastic material can be avoided.

5. Wiper blade according to any of the preceding claims, **characterized in that** the supporting rail (214) is welded to the base connecting device (160) by ultrasound welding in the predefined connecting region (180).

6. Wiper blade according to any of the preceding claims, **characterized in that** on the base connecting device (160) is attached an adapter unit (150) for hinging of the wiping strip (112) on a wiper arm (118), which unit is formed to connect with a connecting element (190) allocated to the wiper arm (118).

## Revendications

1. Balai d'essuie-glace (100) pour un essuie-glace, comprenant une raclette de balai d'essuie-glace (112), sur laquelle est disposé au moins un rail de support (214) qui présente un élément de ressort (215) pourvu d'une gaine en plastique (217), la gaine en plastique (217) présentant un plastique thermoplastique avec un point de fusion prédéfini et étant soudée au moins dans une région de connexion prédéfinie (180) à un dispositif de raccordement de base (160), le dispositif de raccordement de base (160) présentant au moins un premier et un deuxième plastique thermoplastique, **caractérisé en ce qu'**un premier point de fusion est associé au premier plastique thermoplastique et un deuxième point de fusion est associé au deuxième plastique thermoplastique, lequel est inférieur au premier point de fusion et le plastique thermoplastique ayant le point de fusion prédéfini et le deuxième plastique thermoplastique présentant une composition coïncidant sensiblement.

2. Balai d'essuie-glace selon la revendication 1, **caractérisé en ce que** le deuxième point de fusion et le point de fusion prédéfini sont situés à l'intérieur d'une plage de température prédéfinie, qui est située en dessous du premier point de fusion.

3. Balai d'essuie-glace selon la revendication 1 ou 2, **caractérisé en ce que** le deuxième point de fusion et le point de fusion prédéfini sont approximativement identiques.

4. Balai d'essuie-glace selon l'une quelconque des revendications 1 à 3, **caractérisé en ce que** le premier point de fusion est déterminé de telle sorte que dans le cas d'une fusion du plastique thermoplastique ayant le point de fusion prédéfini et du deuxième plastique thermoplastique, une fusion du premier plastique thermoplastique puisse être évitée.

5. Balai d'essuie-glace selon l'une quelconque des revendications précédentes, **caractérisé en ce que** le rail de support (214) est soudé au dispositif de raccordement de base (160) dans la région de connexion prédéfinie (180) par soudage par ultrasons.

6. Balai d'essuie-glace selon l'une quelconque des revendications précédentes, **caractérisé en ce qu'**une unité d'adaptateur (150) pour articuler la raclette de balai d'essuie-glace (112) à un bras d'essuie-glace (118) est fixée au dispositif de raccordement de base (160), laquelle est réalisée pour être connectée à un organe de raccordement (190) associé au bras d'essuie-glace (118).
